# EUROPÄISCHE PATENTSCHRIFT

(11) **EP 3 118 048 B1**
(45) Veröffentlichungstag und Bekanntmachung des Hinweises auf die Patenterteilung: **01.09.2021**
(21) Anmeldenummer: 16001429.6
(22) Anmeldetag: 24.06.2016
(51) Int. Cl.: B60K 37/06, G06F 3/01

(54) **FUNKTIONSAUSWAHL ÜBER GESTIK-STEUERUNG MIT HAPTISCHER RÜCKMELDUNG**
FUNCTION SELECTION USING GESTURE CONTROL WITH HAPTIC FEEDBACK
SELECTION DE FONCTION PAR COMMANDE GESTUELLE COMPRENANT UN RETOUR HAPTIQUE

(30) Priorität: 11.07.2015 DE 102015009031
(43) Veröffentlichungstag der Anmeldung: 18.01.2017
(60) Teilanmeldung: 21186870.8
(73) Patentinhaber: MAN Truck & Bus SE, 80995 München (DE)
(72) Erfinder: Adlhart, Helmut, 81825 München (DE); Eisner, Johannes, 81371 München (DE); Fritz, Maria, 80637 München (DE); Mohra, Holger, 80805 München (DE); Glohr, Tobias, 80336 München (DE); Wahn, Nina Alexandra, 82140 Olching (DE); Wenninger, Dominik, 84576 Teising (DE); Wölfel, Christiane, 82418 Hofheim (DE); Zipf, Christoph, 97922 Gerlachsheim (DE)
(74) Vertreter: v. Bezold & Partner Patentanwälte - PartG mbB

(56) Entgegenhaltungen:
- DE-A1-102013 019 570
- DE-A1-102013 201 675
- US-A1- 2015 169 062

## Beschreibung

Die Erfindung betrifft ein Verfahren zur Anwendung in einem Fahrzeug, vorzugsweise einem Kraftfahrzeug, insbesondere einem Nutzfahrzeug, z. B. einem Lastkraftwagen oder einem Omnibus. Das Verfahren dient insbesondere zur durch Gestik-Steuerung berührungslosen Bedienung (z. B. Betätigung, Funktionsauswahl, Funktionsaktivierung, etc.) einer Fahrzeugeinrichtung. Die Erfindung betrifft ebenfalls eine entsprechende Vorrichtung.

DE 10 2013 201675 A1 offenbart eine Bedienschnittstelle zum Bedienen eines Multimediageräts, wobei Eingabesensoren berührungslose Eingaben erfassen können, die durch Gestikulieren erfolgen. Rücksprünge und Einschliffe können vorgesehen sein, um der Bedienperson durch Ertasten ein Bedienelement zu erkennen zu geben. DE 10 2013 019570 A1 und US 2015/169062 A1 offenbaren Bedieneinrichtungen mit Gestik-Steuerung und Feedback. Als einfache Möglichkeit der Bedienung hält die Gestensteuerung allmählich Einzug in Kraftfahrzeuge. Hierzu wird z. B. auf die DE 10 2009 057 739 A1 verwiesen. Bei der Gestensteuerung werden einzelne Funktionen im Kraftfahrzeug mittels bestimmter Finger- oder Handgesten ausgewählt, was etliche Vorteile mit sich bringt, z. B. den Fahrzeugführer (Bediener) kaum von seiner zentralen Aufgabe, dem Fahren des Kraftfahrzeugs, ablenkt. Allerdings erhält der Fahrzeugführer bei der Gestensteuerung in der Luft, also ohne physischen Kontakt mit einem Bedienelement, kein direktes Feedback, also kein Feedback am Finger oder an der Hand, sondern allenfalls ein indirektes Feedback über beispielsweise Anzeigen auf einem Display. Ein weiterer Nachteil ist, dass der Fahrzeugführer nicht wahrnehmen kann, welche möglichen Gesten für die Gestensteuerung zur Verfügung stehen, anders als beispielsweise bei einem Touch-Display, bei welchem verschiedene Buttons zur Verfügung stehen und ausgewählt werden können.

Eine Aufgabe der Erfindung ist es, eine Möglichkeit zu schaffen, mittels der die Gestik-Steuerung in einem Fahrzeug verbessert werden kann, z. B. um die Nutzerakzeptanz zu steigern.

Diese Aufgabe wird mit den Merkmalen der unabhängigen Ansprüche gelöst. Vorteilhafte Weiterbildungen der Erfindungen können den Unteransprüchen und der folgenden Beschreibung bevorzugter Ausführungsformen der Erfindung entnommen werden.

Die Erfindung schafft ein Verfahren zur Anwendung in einem Fahrzeug, vorzugsweise einem Kraftfahrzeug, insbesondere einem Nutzfahrzeug, z. B. einem Lastkraftwagen oder einem Omnibus. Das Verfahren ist insbesondere zur durch Gestik-Steuerung berührungslosen Betätigung, insbesondere Bedienung, einer Fahrzeugeinrichtung (z. B. eine Audio-Einrichtung, ein Schiebedach, ein Warnblinker, ein Fahrzeugfenster, eine Fahrzeugtüre, ein Schaltelement, etc.) ausgeführt.

Das Verfahren zeichnet sich insbesondere dadurch aus, dass eine Gestik einer Person (z. B. Fahrzeugführer und/oder Bedienperson) zur berührungslosen Betätigung einer Fahrzeugeinrichtung erfasst wird (z. B. über ein Kamerasystem oder ein anderes geeignetes Erfassungsmodell) und zu der Gestik zumindest ein haptisches Feedback, also zumindest eine haptische Rückmeldung, für die Person erzeugt wird, um vorzugsweise zumindest einen Teil der Betätigung, also insbesondere der Gestik, haptisch und somit zweckmäßig spürbar zu begleiten. Dadurch kann zweckmäßig ein virtuelles Bedienelement (z. B. ein virtueller Taster) geschaffen werden und/oder eine Betätigung eines physischen, insbesondere mechanischen bzw. realen, Bedienelements (z. B. eines Tasters) haptisch imitiert werden. Alternativ oder ergänzend kann bei dem Verfahren der Person vorzugsweise haptisch eine Information übermittelt werden, vorzugsweise zur intuitiven Anleitung (z. B. Erklärung, Aufzeigen, Klarmachung, etc.), welche Gestik zur berührungslosen Betätigung der Fahrzeugeinrichtung auszuführen ist und somit zweckmäßig hinterlegt ist. Wobei das haptische Feedback zumindest einen Luftstrom umfasst.

Die Gestik kann eine oder mehrere Gesten umfassen.

Die Gestik ist vorzugsweise eine Hand- und/oder Fingergestik, z. B. eine Schiebe-, Wisch- und/oder Fingertipp-Gestik.

Die Gestik entspricht insbesondere zumindest abschnittsweise der Betätigung. So kann z. B. eine Beendigung der Gestik zugleich eine Beendigung der Betätigung entsprechen.

Die berührungslose Betätigung kann z. B. eine Bedienung, eine Auswahl einer Funktion und/oder eine Aktivierung einer Funktion einer Fahrzeugeinrichtung umfassen.

Die berührungslose Betätigung umfasst insbesondere eine Betätigung ohne physischen Kontakt der Person, insbesondere deren Hand, mit einem physischen und/oder mechanischen Bedienelement.

Das haptische Feedback kann ein einzelnes haptisches Feedback oder mehrere haptische Feedbacks umfassen, z. B. zeitgleich und/oder nacheinander ausgeführte Feedbacks.

Ein haptisches Feedback wird zweckmäßig während der Gestik der Person ausgeführt.

Es ist ebenfalls möglich, dass ein haptisches Feedback bei Beendigung der Betätigung und/oder zweckmäßig unmittelbar danach erfolgt.

Ein haptisches Feedback kann zweckmäßig zu Beginn der Betätigung erfolgen, z. B. als Startsignal.

Während der Gestik der Person können vorzugsweise unterschiedliche haptische Feedbacks für die Person ausgeführt werden, die z. B. zeitgleich erfolgen und sich zweckgemäß überlagern können und/oder nacheinander erfolgen können.

Es ist möglich, dass ein haptisches Feedback während der Gestik variiert und sich somit zweckmäßig verändert.

Es ist möglich, dass ein haptisches Feedback über eine erfolgreiche Ausführung der Gestik und somit zweckmäßig über eine erfolgreiche Betätigung der Fahrzeugeinrichtung erzeugt wird und dadurch zweckmäßig die Person hierüber haptisch informiert wird.

Es ist möglich, dass ein haptisches Feedback einen Kraft-Weg-Verlauf und/oder eine Betätigung eines physischen, quasi realen und/oder mechanischen Bedienelements, haptisch imitiert, z. B. mittels einer Gegenkraft. Dazu kann insbesondere zumindest ein Luftstrom genutzt werden, der vorzugsweise so gestaltet ist, dass ein Kraft-Weg-Verlauf und/oder eine Betätigung eines physischen Bedienelements haptisch imitiert werden.

Insbesondere kann der Luftstrom als haptisches Feedback im Wesentlichen entgegen der Richtung der Bewegung der Person, insbesondere deren Hand, während der Gestik ausgeführt werden, so dass insbesondere eine Gegenkraft erzeugt werden kann, zweckmäßig analog der Gegenkraft beim Drücken eines physischen (realen bzw. mechanischen) Bedienelements. Alternativ oder ergänzend kann der Luftstrom als haptisches Feedback im Wesentlichen in Richtung der Gestik-Bewegung der Person, insbesondere deren Hand, erzeugt werden, wodurch z. B. ein Nachlaufen, z. B. ein Rückspringen und/oder Rückbewegen, eines physischen (realen bzw. mechanischen) Bedienelements haptisch imitiert werden kann. Dadurch kann vorzugsweise die Betätigung eines (echten bzw. physischen) Bedienelements, insbesondere Tasters, haptisch imitiert werden.

Im Rahmen der Erfindung kann das Merkmal Feedback nicht nur ein Feedback in Form einer Rückmeldung umfassen, sondern vorzugsweise auch eine Führung bzw. Beeinflussung der Gestik der Person.

So ist es z. B. möglich, dass ein Luftstrom insbesondere als haptisches Feedback zur Führung der Hand der Person während der Gestik und/oder zur aktiven Beeinflussung der Gestik ausgeführt wird, wodurch haptisch korrigierend oder hilfestellungsleistend in die Betätigung eingegriffen werden kann.

Der hierin offenbarte Luftstrom kann einen stetigen, insbesondere kontinuierlichen Luftstrom und/oder einen oder mehrere Luftstöße umfassen.

Der Luftstrom kann als sich verändernder Luftstrom ausgebildet werden.

Der Luftstrom ist vorzugsweise ein stetiger, aber sich veränderlicher Luftstrom.

Luftströme können zeitgleich ausgeführt werden und sich somit zweckmäßig überlagern und/oder nacheinander ausgeführt werden.

Ein Luftstrom kann sich z. B. kontinuierlich verändern. Alternativ oder ergänzend kann ein Luftstrom intermittierend ausgeführt werden, z. B. mittels mehrerer nacheinander erfolgender Luftstöße.

Der Luftstrom kann zumindest eine Schwelle, zweckmäßig zumindest einen Hoch- und/oder Tiefpunkt, umfassen.

Es ist möglich, dass ein Luftstrom seine Stärke, seine Richtung (z. B. auf und ab, von links nach rechts oder umgekehrt, von vorne nach hinten oder umgekehrt, etc. oder eine Kombination hiervon) und/oder seine Temperatur ändert.

Es ist möglich, dass allgemein ein haptisches Feedback eine Temperaturänderung umfasst, z. B. eine Änderung der Temperatur eines Fahrzeugsitzes, eines Lenkrads oder eines anderen Fahrzeuginnenteils. Das haptische Feedback kann somit zweckmäßig mit unterschiedliche Temperaturbereichen arbeiten.

Es ist möglich, dass ein haptisches Feedback über ein Magnetfeld erzeugt wird: In diesem Fall hätte die Person ein z. B. metallisches, ferromagnetisches und/oder magnetisches Teil zu tragen, vorzugsweise an der Hand, einem Finger oder am Arm.

Zuvor wurde bereits erwähnt, dass für die Person eine Information haptisch zur Verfügung gestellt werden kann, welche Gestik zur berührungslosen Betätigung, insbesondere Bedienung, der Fahrzeugeinrichtung auszuführen ist. Die Information kann zweckmäßig intuitiv erfolgen, z. B. Luftstrom nach links, auszuführende Gestik-Bewegung nach rechts, Luftstrom nach links, auszuführende Gestik-Bewegung nach links, etc.

Die Information an die Person wird haptisch übermittelt, insbesondere mittels zumindest eines Luftstroms. Die Information kann grundsätzlich wie das haptische Feedback ausgeführt werden, so dass die Offenbarung zum haptischen Feedback sinngemäß auch für die haptische Information gilt und insoweit ebenfalls zweckmäßig beanspruchbar ist.

Die Information kann zusätzlich zum zumindest einen Luftstroms allerdings auch mittels akustischer Sprachausgabe erfolgen und/oder visuell, zweckmäßig auf einem Display, z. B. mittels eines oder mehrerer Bilder oder sogar eines Films.

Die Anforderung der Information kann über eine Gestik der Person und/oder über eine akustische Spracheingabe der Person erfolgen.

Zusätzlich und somit als Ergänzung zu dem haptischen Feedback kann ein Geräusch-Feedback, z. B. ein Klick-Geräusch, zweckmäßig ähnlich einem mechanischen Bedien- und/oder Tasterelement, ein Sprachausgabe-Feedback und/oder ein visuelles Feedback, z. B. auf einem Display erzeugt werden.

Das haptische Feedback und/oder die haptische Information sind insbesondere auf die Hand der Person gerichtet.

Die Erfindung ist nicht auf ein Verfahren beschränkt, sondern umfasst auch eine Vorrichtung gemäß Anspruch 14, für ein Fahrzeug, z. B. ein Kraftfahrzeug, insbesondere ein Nutzfahrzeug, wie etwa einen Lastkraftwagen oder einen Omnibus. Die Vorrichtung dient vorzugsweise zur durch Gestik-Steuerung berührungslosen Bedienung einer Fahrzeugeinrichtung und/oder zur Durchführung des Verfahrens wie hierin offenbart.

Die Vorrichtung umfasst zweckgemäß mehrere Einrichtungen, die zur Ausführung des Verfahrens wie hierin offenbart ausgeführt sind. Sie umfasst somit eine Einrichtung, ausgeführt, um eine Gestik einer Person zur berührungslosen Betätigung einer Fahrzeugeinrichtung zu erfassen, und eine Einrichtung, ausgeführt, um zu der Gestik zumindest ein haptisches Feedback für die Person zu erzeugen, und/oder eine Einrichtung, ausgeführt, um der Person eine Information haptisch zu übermitteln, vorzugsweise zur intuitiven Anleitung (z. B. Erklärung, Aufzeigen, Klarmachung, etc.), welche Gestik zur berührungslosen Betätigung der Fahrzeugeinrichtung auszuführen ist und somit insbesondere hinterlegt ist.

Weitere Vorrichtungsmerkmale ergeben sich aus der Offenbarung zum Verfahren, auf die verwiesen wird, um Wiederholungen zu vermeiden.

Die hierin zum Verfahren gemachte Offenbarung bzw. Beschreibung gilt sinngemäß auch für die Vorrichtung und ist insoweit ebenfalls zweckmäßig beanspruchbar.

Die Erfindung umfasst ferner ein Fahrzeug mit einer Vorrichtung wie hierin offenbart.

Das Fahrzeug kann ein Kraftfahrzeug sein, vorzugsweise ein Nutzfahrzeug, insbesondere ein Lastkraftwagen oder Omnibus.

Die zuvor beschriebenen Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: illustriert ein Verfahren mit einer Gestik zur Bedienung eines Schiebedachs und haptischem Feedback gemäß einer Ausführungsform der Erfindung,
- Figur 2: illustriert ein Verfahren mit einer Gestik zur Bedienung eines Warnblinkers und haptischem Feedback gemäß einer Ausführungsform der Erfindung,
- Figur 3: illustriert ein Verfahren mit einer Gestik zur Bedienung einer Audio-Einrichtung und haptischem Feedback gemäß einer Ausführungsform der Erfindung,
- Figur 4: illustriert eine Gestik und ein haptisches Feedback gemäß einer Ausführungsform der Erfindung;
- Figur 5: illustriert eine Gestik und ein haptisches Feedback gemäß einer anderen Ausführungsform der Erfindung, und
- Figur 6: illustriert eine Gestik und ein haptisches Feedback gemäß einer wiederum anderen Ausführungsform der Erfindung.

Die unter Bezugnahme auf die Figuren beschriebenen Ausführungsformen stimmen teilweise überein, so dass ähnliche oder identische Teile mit den gleichen Bezugszeichen versehen sind und zu deren Erläuterung auch auf die Beschreibung der anderen Figuren bzw. Ausführungsformen verwiesen wird, um Wiederholungen zu vermeiden.

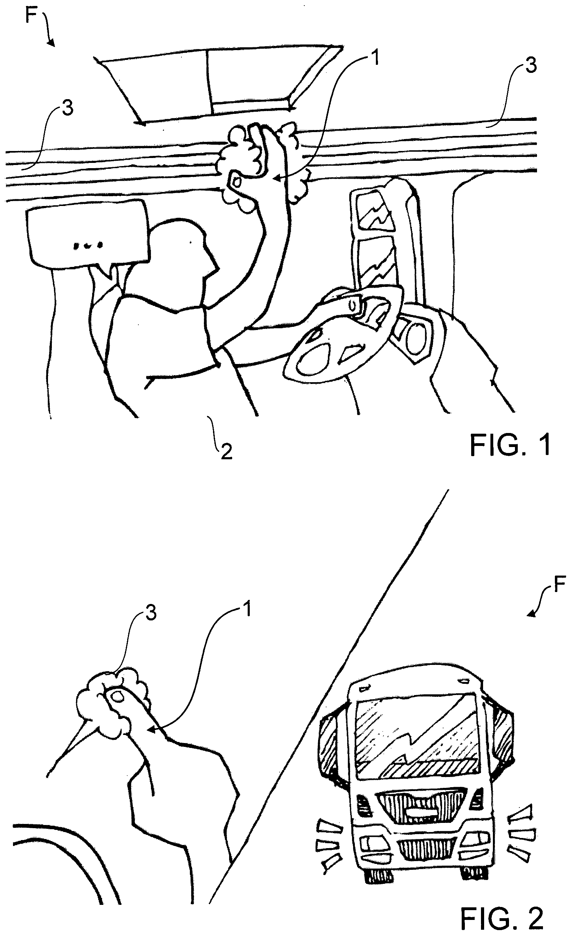

Figur 1 illustriert ein Verfahren zur Anwendung in einem Fahrzeug F gemäß einer Ausführungsform der Erfindung. Das Verfahren dient zur durch Gestensteuerung berührungslosen Bedienung einer Fahrzeugeinrichtung in Form eines Schiebedachs.

Mittels einer Hand-Gestik 1 einer Bedienperson 2, nämlich vorzugsweise des Fahrzeugführers, wird das Schiebedach berührungslos betätigt, z. B. zum Öffnen und Schließen.

Zu der Gestik 1, also insbesondere auf die Gestik 1 hin, und insbesondere während der Gestik 1 wird ein haptisches Feedback 3 in Form zweier in entgegengesetzte Richtungen gerichteter Luftströme auf die die Gestik 1 ausführende Hand der Bedienperson 2 erzeugt.

Darüber hinaus kann der Bedienperson 2 ein haptisches Feedback 3 in Form eines kurzen Luftstoßes gegeben werden, welches über die erfolgreiche Ausführung der Gestik 1 bzw. die erfolgreiche Betätigung, z. B. Auslösung und/oder Beendigung der Funktion, informiert.

Im Speziellen kann die Bedienperson 2 zur berührungslosen Bedienung des Schiebedachs ihre Hand im Wesentlichen senkrecht nach oben in Richtung Schiebedach führen und dann im Wesentlichen waagrecht nach vorne oder hinten zum Öffnen oder Schließen des Schiebedachs. Die Gestik 1 umfasst somit zwei Gesten bzw. eine 2-stufige Geste.

Während der zweiten Geste nach vorne oder hinten wird ein kontinuierlicher Luftstrom als Gegenkraft und haptisches, spürbares Feedback 3 auf die Hand der Bedienperson 2 erzeugt, mit dem Vorteil, dass die Geste "erfahrbarer" wird und die Bedienperson 2 ein Feedback während der Ausführung der Gestik 1 bzw. der Betätigung erhält.

Am Ende der Gestik 1 bzw. an der Stelle, an der die Funktion ausgelöst oder beendet wird, kann ein zusätzliches Feedback 3 z. B. in Form eines kurzen Luftstoßes erzeugt werden, das darüber informiert, dass die Betätigung erfolgreich war und/oder die Funktion erfolgreich ausgeführt wurde.

Die Bedienperson 2 kann des Weiteren einen kontinuierlichen Luftstrom erfahren und an der Stelle, an der die Funktion ausgelöst wird, ein zusätzliches haptisches Feedback 3 erhalten. So kann eine Art Kraft-Weg-Verlauf ähnlich dem eines physischen, mechanischen und somit realen Tasters modelliert werden.

Dadurch kann die berührungslose Betätigung haptisch spürbar gestaltet werden und zwar vorzugsweise so, dass eine Betätigung eines physischen, mechanischen und somit realen Bedienelements, insbesondere Tasters, haptisch imitiert wird. Der oder die Luftströme können zur Imitation der Betätigung modelliert werden, z. B. durch Variation, insbesondere sich veränderlicher Luftstromstärke, Überlagerung und/oder Abfolge von Luftströmen, etc. Ferner kann eine Logik verwendet werden, die beispielsweise erkennt, wenn das Schiebedach bereits komplett geschlossen ist, die Bedienperson 2 aber dennoch die "Schließen-Geste" ausführt, wobei dann ein weiteres haptisches Feedback 3, z. B. ein Luftstoß, erzeugt werden kann, um die Bedienperson 2 hierüber haptisch zu informieren.

Ist die Bedienperson 2 zunächst im Ungewissen, wie das Schiebedach über eine Gestik 1 bedienbar ist, kann sie eine Information hierüber anfordern, also eine Information, welche Gestik 1 zur Bedienung des Schiebedachs auszuführen ist. Dazu kann die Bedienperson 2 ihre Hand zum Schiebedach führen und z. B. mittels Spracheingabe die Information anfordern. Daraufhin kann der Bedienperson 2 haptisch, z. B. mittels eines oder mehrere Luftströme, vermittelt werden, welche Gestik 1 zur berührungslosen Betätigung des Schiebedachs auszuführen ist. So könnte z. B. ein Luftstrom nach vorne erzeugt werden, um der Bedienperson 2 intuitiv zu zeigen, dass eine Handbewegung nach hinten eine Geste ist, um das Schiebedach zu öffnen.

Es ist sogar möglich, dass ein haptisches Feedback 3, vorzugsweise ein Luftstrom, zur Führung der Hand der Bedienperson 2 während der Gestik 1 und zur aktiven Beeinflussung der Gestik 1 genutzt wird, so dass haptisch korrigierend und hilfestellungsleistend in die Gestik 1 bzw. die Betätigung eingegriffen werden kann. Das Merkmal Feedback ist somit im Rahmen der Erfindung breit auszulegen.

Figur 2 illustriert ein Verfahren zur Anwendung in einem Fahrzeug F gemäß einer anderen Ausführungsform der Erfindung. Das Verfahren dient zur durch Gestensteuerung berührungslosen Bedienung einer Fahrzeugeinrichtung in Form eines Warnblinkers.

Die Bedienperson 2 kann durch ein Fingertippen als Gestik 1, analog der Betätigung beim Drücken eines mechanischen, physischen Tasters, den Warnblinker auslösen oder deaktivieren.

Die Bedienperson 2 kann während der Gestik 1 einen kontinuierlichen Luftstrom als haptisches Feedback 3 erfahren und an der Stelle, an der die Funktion ausgelöst wird, ein zusätzliches Feedback 3. Dadurch kann eine Art Kraft-Weg-Verlauf ähnlich dem eines echten, physischen Tasters modelliert werden, um eine Betätigung eines echten, physischen Bedienelements haptisch zu imitieren. Zur Unterstützung des Eindrucks des virtuellen Tasters bzw. der haptischen Imitation könnte zusätzlich zu einer Schwelle im Luftstrom ein Klickgeräusch, wie z. B. bei einem physischen, mechanischen Taster, ausgegeben werden.

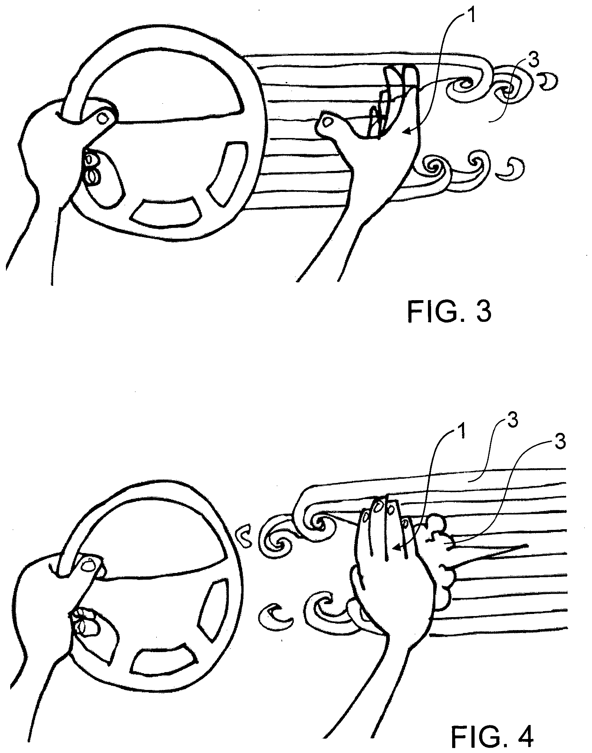

Figur 3 illustriert ein Verfahren zur Anwendung in einem Fahrzeug F gemäß einer anderen Ausführungsform der Erfindung. Das Verfahren dient zur durch Gestensteuerung berührungslosen Bedienung einer Fahrzeugeinrichtung in Form einer Audio-Einrichtung, z. B. Musikabspieleinrichtung, Radio, CD-Player, etc.

Die Bedienperson 2 kann mit einer Gestik 1 z. B. einen Audio-Titel auswählen, vor und/oder zurückspringen. Die Gestik 1 ist z. B. eine Wischgeste mit der ganzen Hand oder einem Finger nach rechts, um einen Audio-Titel nach vorne zu springen.

Dabei kann die Bedienperson 2 während der Wischgeste 1 einen kontinuierlichen Luftstrom 3 als Gegenkraft spüren, mit dem Vorteil, dass die Geste "erfahrbarer" wird und die Bedienperson 2 ein haptisches Feedback 3 während der Gestik 1 erhält.

Am Ende der Gestik 1 bzw. an der Stelle, an der die Funktion ausgelöst wird, kann ein Feedback 3, z. B. in Form eines kurzen Luftstoßes, die Bedienperson 2 darüber informieren, dass ihre Betätigung (Gestik 1) erfolgreich war und die Funktion nun ausgelöst wird.

Des Weiteren kann die Bedienperson 2 als haptisches Feedback 3 einen kontinuierlichen Luftstrom erfahren und an der Stelle, an der die Funktion ausgelöst wird, ein zusätzliches Feedback 3 erhalten. So kann eine Art Kraft-Weg-Verlauf ähnlich dem eines Tasters modelliert werden.

Sofern die Bedienperson 2 zunächst nicht weiß, welche Gestik 1 zur Bedienung der Audio-Einrichtung auszuführen ist, kann sie ihre Hand vor die Audio-Einrichtung halten und beispielsweise über Spracheingabe die Information anfordern, welche Gestik 1 ausgeführt werden kann. Darauf kann die Bedienperson 2 z. B. einen Luftstoß von links und somit eine haptische Information erhalten, um der Bedienperson 2 intuitiv zu zeigen, dass eine Bewegung nach rechts eine mögliche Gestik 1 in diesem Kontext ist (die Hand wird durch den Luftstrom geführt).

Aus den Ausführungsformen der Figuren 1 bis 3 wird ersichtlich, dass zur Erleichterung bzw. Verbesserung der Interaktion mittels Gestik 1 ein zweckmäßig direktes, haptisches Feedback 3 vorzugsweise an die Hand einer Bedienperson 2 darstellbar ist, insbesondere über einen oder mehrere Luftströme, alternativ oder ergänzend aber auch mittels eines Magnetfelds und/oder Temperaturänderungen.

Damit kann während der Betätigung bzw. während der Gestik 1 ein haptisches Feedback 3 gegeben werden (vorzugsweise analog zu der Gegenkraft beim Drücken eines Tasters), ein haptisches Feedback 3 über eine erfolgreiche Ausführung der Gestik 1 bzw. Auslösung und/oder Beendigung der ausgewählten Funktion gegeben werden, und/oder eine Information gegeben werden, welche Gestik 1 im entsprechenden Kontext ausgeführt werden kann.

Die Figuren 4 bis 6 illustrieren insbesondere unterschiedliche haptische Feedbacks 3 an die Hand der Bedienperson 2, die analog ebenfalls für die haptische Informationsübermittlung nutzbar sind. Die haptischen Feedbacks 3 können einzeln oder in Kombination nacheinander und/oder zeitgleich und sich somit überlagernd ausgeführt werden.

Figur 4 z. B. illustriert einen kontinuierlichen Luftstrom als haptisches Feedback 3 und zusätzlich einen Luftstoß als haptisches Feedback 3, so dass sich die zwei Feedbacks 3 zweckmäßig überlagern.

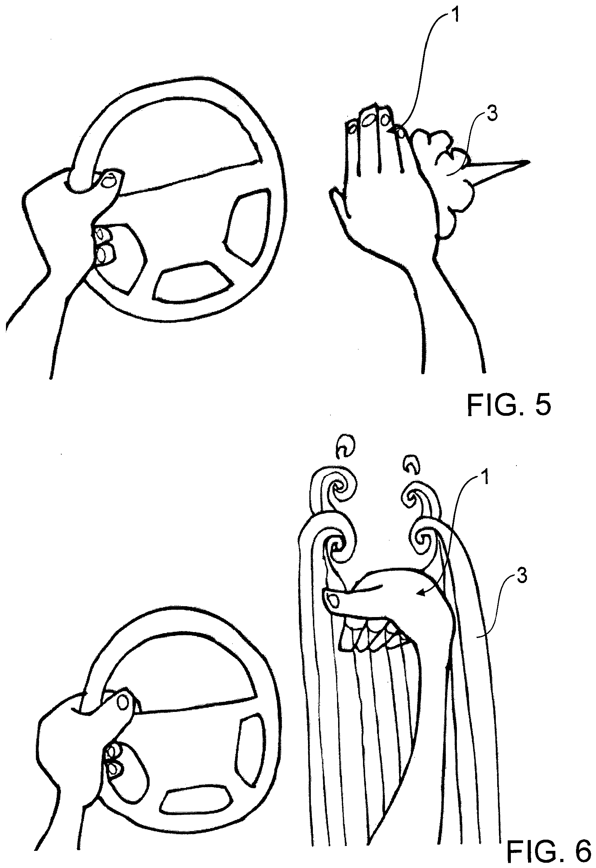

Figur 5 illustriert einen seitlichen Luftstoß 3 als haptisches Feedback 3.

Figur 6 illustriert einen im Wesentlichen senkrechten kontinuierlichen Luftstrom 3 als haptisches Feedback 3.

Im Rahmen der Erfindung sind ebenfalls z. B. Luftströme von vorne nach hinten oder umgekehrt oder schräge Luftströme möglich.

Die haptischen Feedbacks 3, insbesondere der oder die Luftströme, können genutzt werden, um der Bedienperson 2 ein haptisches Feedback 3 zu der Gestik 1 zu vermitteln. Alternativ oder ergänzend kann der Bedienperson 3 haptisch mittels zumindest eines Luftstroms eine Information verschafft werden, welche Gestik 1 zur berührungslosen Betätigung der Fahrzeugeinrichtung auszuführen ist.

Der hierin offenbarte zumindest eine Luftstrom kann genutzt werden, um der Bedienperson 2 ein haptisches Feedback 3 zu der Gestik 1 zu vermitteln und/oder um die Bedienperson 2 darüber zu informieren, welche Gestik 1 zur berührungslosen Betätigung der Fahrzeugeinrichtung auszuführen ist.

Der hierin offenbarte zumindest eine Luftstrom kann als haptisches Feedback 3 zur Führung der Hand der Person während der Gestik 1 und/oder zur haptischen Beeinflussung der Gestik 1 genutzt werden, um korrigierend bzw. hilfestellungleistend in die Betätigung/Gestik einzugreifen.

Die Erfindung ist nicht auf die oben beschriebenen bevorzugten Ausführungsformen beschränkt.

### Bezugszeichenliste

- 1: Gestik, z. B. eine oder mehrere Gesten, insbesondere Hand-/Fingergestik
- 2: Person, z. B. Bedienperson und/oder Fahrzeugführer
- 3: Haptisches Feedback
- F: Fahrzeug

## Patentansprüche

1. Verfahren zur Anwendung in einem Fahrzeug (F), insbesondere zur über Gestik (1) berührungslosen Bedienung einer Fahrzeugeinrichtung, wobei
- eine Gestik (1) einer Person (2) zur berührungslosen Betätigung einer Fahrzeugeinrichtung erfasst wird, **dadurch gekennzeichnet, dass**
- zu der Gestik (1) zumindest ein haptisches Feedback (3) für die Person (2) erzeugt wird, vorzugsweise um zumindest einen Teil der Betätigung haptisch zu begleiten, wobei das haptische Feedback (3) zumindest einen Luftstrom umfasst, und/oder
- der Person (2) eine Information haptisch übermittelt wird, welche Gestik (1) zur berührungslosen Betätigung der Fahrzeugeinrichtung auszuführen ist, wobei das haptische Feedback (3) zumindest einen Luftstrom umfasst.

2. Verfahren nach Anspruch 1, wobei das haptische Feedback (3) während der Gestik (1) erfolgt.

3. Verfahren nach Anspruch 1 oder 2, wobei das haptische Feedback (3) bei Beendigung, nach Beendigung und/oder zu Beginn der Betätigung erfolgt.

4. Verfahren nach einem der vorhergehenden Ansprüche, wobei das haptische Feedback (3) über eine erfolgreiche Ausführung der Betätigung erfolgt.

5. Verfahren nach einem der vorhergehenden Ansprüche, wobei das haptische Feedback (3) einen Kraft-Weg-Verlauf und/oder eine Betätigung eines physischen Bedienelements haptisch imitiert.

6. Verfahren nach einem der vorhergehenden Ansprüche, wobei der Luftstrom als haptisches Feedback (3) entgegen der Richtung der Gestik-Bewegung der Person (2) erzeugt wird und/oder wobei ein Luftstrom als haptisches Feedback (3) in Richtung der Gestik-Bewegung der Person (2) erzeugt wird.

7. Verfahren nach einem der vorhergehenden Ansprüche, wobei der Luftstrom als haptisches Feedback (3) zur Führung der Hand der Person während der Gestik (1) und/oder zur Beeinflussung der Gestik (1) erfolgt.

8. Verfahren nach einem der vorhergehenden Ansprüche, wobei der Luftstrom ausgebildet ist, um einen Kraft-Weg-Verlauf und/oder eine Betätigung eines physischen Bedienelements zu imitieren, und/oder wobei der Luftstrom einen stetigen und/oder variierenden Luftstrom mit zumindest einer Schwelle umfasst.

9. Verfahren nach einem der vorhergehenden Ansprüche, wobei der Luftstrom seine Stärke, seine Richtung und/oder seine Temperatur ändert.

10. Verfahren nach einem der vorhergehenden Ansprüche, wobei das haptische Feedback (3) eine Temperaturänderung umfasst und/oder wobei ein haptisches Feedback (3) über zumindest ein Magnetfeld erfolgt.

11. Verfahren nach einem der vorhergehenden Ansprüche, wobei die Information mittels zumindest eines Luftstroms übermittelt wird, wobei die Information zusätzlich auf einem Display übermittelt wird und/oder über eine akustische Sprachausgabe übermittelt wird.

12. Verfahren nach nach Anspruch 11 wobei die Anforderung der Information über die Gestik (3) und über die akustische Spracheingabe der Person (2) erfolgt.

13. Verfahren nach einem der vorhergehenden Ansprüche, wobei zusätzlich zu dem haptischen Feedback (3) ein Geräusch-Feedback, ein Sprachausgabe-Feedback und/oder ein visuelles Feedback erzeugt werden.

14. Vorrichtung für ein Fahrzeug (F), vorzugsweise zur durch Gestik (1) berührungslosen Bedienung einer Fahrzeugeinrichtung und insbesondere zur Durchführung des Verfahrens nach einem der vorhergehenden Ansprüche, mit
- einer Einrichtung, ausgeführt, um eine Gestik (1) einer Person (2) zur berührungslosen Betätigung einer Fahrzeugeinrichtung zu erfassen, und
- einer Einrichtung, ausgeführt, um zu der Gestik (1) zumindest ein haptisches Feedback (3) für die Person (2) zu erzeugen, vorzugsweise so dass zumindest ein Teil der Betätigung haptisch begleitet wird, wobei das haptische Feedback (3) zumindest einen Luftstrom umfasst, und/oder
- einer Einrichtung, ausgeführt, um der Person (2) eine Information haptisch zu übermitteln, welche Gestik (1) zur berührungslosen Betätigung der Fahrzeugeinrichtung auszuführen ist, wobei das haptische Feedback (3) zumindest einen Luftstrom umfasst.

15. Fahrzeug, mit einer Vorrichtung nach Anspruch 14.

## Claims

1. A method for use in a vehicle (F), in particular for contactlessly operating a vehicle device using gestures (1), wherein
- a gesture (1) of a person (2) for contactlessly actuating a vehicle device is captured, **characterized in that**
- at least one item of haptic feedback (3) is generated for the person (2) in relation to the gesture (1), preferably in order to haptically accompany at least part of the actuation, wherein the haptic feedback (3) comprises at least one air flow,
and/or
- an item of information relating to which gesture (1) should be performed in order to contactlessly actuate the vehicle device is haptically conveyed to the person (2), wherein the haptic feedback (3) comprises at least one air flow.

2. The method according to Claim 1, wherein the haptic feedback (3) is provided during the gesture (1).

3. The method according to Claim 1 or 2, wherein the haptic feedback (3) is provided upon ending, after ending and/or at the beginning of the actuation.

4. The method according to one of the preceding claims, wherein the haptic feedback (3) is provided in relation to successful execution of the actuation.

5. The method according to one of the preceding claims, wherein the haptic feedback (3) haptically imitates a force-distance profile and/or actuation of a physical operating element.

6. The method according to one of the preceding claims, wherein the air flow is produced as haptic feedback (3) counter to the direction of the gesture movement of the person (2), and/or wherein an air flow is produced as haptic feedback (3) in the direction of the gesture movement of the person (2).

7. The method according to one of the preceding claims, wherein the air flow is effected as haptic feedback (3) for guiding the person's hand during the gesture (1) and/or for influencing the gesture (1).

8. The method according to one of the preceding claims, wherein the air flow is designed to imitate a force-distance profile and/or actuation of a physical operating element, and/or wherein the air flow comprises a continuous and/or varying air flow with at least one threshold.

9. The method according to one of the preceding claims, wherein the air flow changes its strength, its direction and/or its temperature.

10. The method according to one of the preceding claims, wherein the haptic feedback (3) comprises a temperature change, and/or wherein haptic feedback (3) is provided via at least one magnetic field.

11. The method according to one of the preceding claims, wherein the information is conveyed by means of at least one air flow, wherein the information is additionally conveyed on a display and/or is conveyed via an acoustic voice output.

12. The method according to Claim 11, wherein the request for the information is effected via the gesture (3) and via the acoustic voice input of the person (2).

13. The method according to one of the preceding claims, wherein, in addition to the haptic feedback (3), noise feedback, voice output feedback and/or visual feedback is/are generated.

14. An apparatus for a vehicle (F), preferably for contactlessly operating a vehicle device by means of gestures (1) and, in particular, for carrying out the method according to one of the preceding claims, having
- a device designed to capture a gesture (1) of a person (2) for contactlessly actuating a vehicle device, and
- a device designed to generate at least one item of haptic feedback (3) for the person (2) in relation to the gesture (1), preferably such that at least part of the actuation is haptically accompanied, wherein the haptic feedback (3) comprises at least one air flow, and/or
- a device designed to haptically convey, to the person (2), an item of information relating to which gesture (1) should be performed in order to contactlessly actuate the vehicle device, wherein the haptic feedback (3) comprises at least one air flow.

15. A vehicle having an apparatus according to Claim 14.

## Revendications

1. Procédé d'application dans un véhicule (F) destiné en particulier à la commande sans contact d'un équipement de véhicule par un ensemble de gestes (1),
- un ensemble de gestes (1) d'une personne (2) étant détecté pour actionner sans contact un équipement de véhicule, **caractérisé en ce que**
- au moins un retour haptique (3) destiné à la personne (2) étant généré pour l'ensemble de gestes (1), de préférence pour accompagner de manière haptique au moins une partie de l'actionnement, le retour haptique (3) comprenant au moins un flux d'air,
et/ou
- une information sur l'ensemble de gestes (1) à effectuer pour l'actionnement sans contact de l'équipement du véhicule étant transmise à la personne (2) de manière haptique.

2. Procédé selon la revendication 1, le retour haptique (3) étant effectué pendant l'ensemble de gestes (1).

3. Procédé selon la revendication 1 ou 2, le retour haptique (3) étant effectué à la fin, après la fin et/ou au début de l'actionnement.

4. Procédé selon l'une des revendications précédentes, le retour haptique (3) étant effectué via une exécution réussie de l'actionnement.

5. Procédé selon l'une des revendications précédentes, le retour haptique (3) imitant de manière haptique une variation de force en fonction du chemin et/ou un actionnement d'un élément de commande physique.

6. Procédé selon l'une des revendications précédentes, le flux d'air étant généré sous la forme d'un retour haptique (3) dans la direction opposée au mouvement gestuel de la personne (2) et/ou un flux d'air étant généré sous la forme d'un retour haptique (3) dans la direction du mouvement gestuel de la personne (2).

7. Procédé selon l'une des revendications précédentes, le flux d'air étant effectué sous la forme d'un retour haptique (3) pour guider la main de la personne pendant l'ensemble de gestes (1) et/ou pour influer sur l'ensemble de gestes (1).

8. Procédé selon l'une des revendications précédentes, le flux d'air étant conçu pour imiter une variation de force en fonction du chemin et/ou un actionnement d'un élément de commande physique, et/ou le flux d'air comprenant un flux d'air constant et/ou variable pourvu d'au moins un seuil.

9. Procédé selon l'une des revendications précédentes, le flux d'air variant en force, en direction et/ou en température.

10. Procédé selon l'une des revendications précédentes, le retour haptique (3) comprenant une variation de température et/ou un retour haptique (3) étant effectué par le biais d'au moins un champ magnétique.

11. Procédé selon l'une des revendications précédentes, l'information étant transmise au moyen d'au moins un flux d'air, l'information étant de plus transmise sur un affichage et/ou transmise par le biais d'une sortie vocale acoustique.

12. Procédé selon la revendication 11, la demande d'information étant effectuée par le biais de l'ensemble de gestes (3) et de l'entrée vocale acoustique de la personne (2).

13. Procédé selon l'une des revendications précédentes, un retour sonore, un retour de sortie vocale et/ou un retour visuel étant générés en plus du retour haptique (3).

14. Dispositif destiné à un véhicule (F), de préférence pour la commande sans contact d'un équipement de véhicule par un ensemble de gestes (1) et en particulier pour mettre en œuvre le procédé selon l'une des revendications précédentes, ledit dispositif comprenant
- un équipement conçu pour détecter un ensemble de gestes (1) d'une personne (2) pour l'actionnement sans contact d'un équipement de véhicule, et
- un équipement conçu pour générer au moins un retour haptique (3) destiné à la personne (2) pour l'ensemble de gestes (1), de préférence de sorte qu'au moins une partie de l'actionnement soit accompagnée de manière haptique, le retour haptique (3) comprenant au moins un flux d'air, et/ou
- un équipement conçu pour transmettre de manière haptique à la personne (2) une information sur l'ensemble de gestes (1) à effectuer pour l'actionnement sans contact de l'équipement du véhicule, le retour haptique (3) comprenant au moins un flux d'air.

15. Véhicule comprenant un dispositif selon la revendication 14.
